# EUROPÄISCHE PATENTSCHRIFT

(11) **EP 2 842 825 B1**
(45) Veröffentlichungstag und Bekanntmachung des Hinweises auf die Patenterteilung: **30.03.2016**
(21) Anmeldenummer: 14179438.8
(22) Anmeldetag: 01.08.2014
(51) Int. Cl.: B61C 5/02, B60K 11/04

(54) **SCHIENENFAHRZEUG MIT KÜHLERANORDNUNG**
RAIL VEHICLE WITH COOLER ASSEMBLY
VÉHICULE SUR RAIL DOTÉ D'UN SYSTÈME DE REFROIDISSEUR

(30) Priorität: 15.08.2013 DE 102013216222
(43) Veröffentlichungstag der Anmeldung: 04.03.2015
(73) Patentinhaber: Mahle International GmbH, 70376 Stuttgart (DE)
(72) Erfinder: Frank, Stefan, 70839 Gerlingen (DE); Kastner, Franz, 74321 Bietigheim (DE)
(74) Vertreter: BRP Renaud & Partner mbB Rechtsanwälte Patentanwälte Steuerberater

(56) Entgegenhaltungen:
- DE-A1- 10 205 591
- DE-A1-102006 043 110
- DE-A1-102007 021 746
- DE-B3-102011 114 354
- DE-C- 871 309

## Beschreibung

Die vorliegende Erfindung betrifft eine Schienenfahrzeug-Kühleranordnung für ein Schienenfahrzeug sowie ein damit ausgestattetes Schienenfahrzeug.

Eine derartige Schienenfahrzeug-Kühleranordnung kann in üblicher Weise einen Kühler aufweisen, der in einen Kühlkreis zum Führen eines flüssigen Kühlmittels eingebunden ist und durch den ein Kühlluftpfad zum Führen eines Kühlluftstroms hindurchgeführt ist. In diesem Kühlluftpfad kann stromauf des Kühlers ein Abscheider zum Abscheiden von flüssigen und/oder festen Verunreinigungen des Kühlluftstroms angeordnet sein. Auf diese Weise kann eine gewisse Reinigung des Kühlluftstroms realisiert werden. Eine übermäßige Verschmutzung des Kühlluftstroms, beispielsweise mit Sand, Eisen, Kupfer, Salzen und verunreinigtem Wasser, kann zu einer beschleunigten Korrosion des Kühlers führen. Des Weiteren ist bei einer Unterfluranordnung der Kühlanlage damit zu rechnen, dass neben Sand auch große Mengen an Wasser angesaugt werden, wodurch die Funktion des Kühlers beeinträchtigt werden kann.

Ein für Schienenfahrzeuge geeigneter Abscheider kann mit einer Abscheidestruktur ausgestattet sein, die von der Kühlluftströmung durchströmbar ist und die abgeschiedene Verunreinigungen beispielsweise einem Sammelkasten zuführt. Bei üblicher Unterfluranordnung ist dieser Sammelkasten nach unten, also zu einem Schienenbett hin offen, so dass die abgeschiedenen Verunreinigungen nach unten in die Umgebung abgelassen werden können.

Bei modernen Hochgeschwindigkeitszügen ergeben sich für die Kühleranordnung Probleme hinsichtlich der Effizienz der Abscheidung. Insbesondere kann sich zwischen dem Schienenbett und der Unterseite des Schienenfahrzeugs ein Überdruck ausbilden, der die gesammelten Verunreinigungen daran hindert, aus dem Sammelkasten auszutreten.

Die vorliegende Erfindung beschäftigt sich mit dem Problem, für eine Schienenfahrzeug-Kühleranordnung bzw. für ein damit ausgestattetes Schienenfahrzeug eine verbesserte Ausführungsform anzugeben, die sich für Hochgeschwindigkeitszüge eignet und die sich insbesondere dadurch auszeichnet, dass eine zuverlässige Abführung der abgeschiedenen Verunreinigungen möglich ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den jeweiligen Sammelkasten gegenüber einem Hochdruckbereich geschlossen auszuführen, der sich während der Fahrt des Schienenfahrzeugs an einer Unterseite des Fahrzeugbodens ausbilden kann. Gleichzeitig wird vorgeschlagen, den jeweiligen Sammelkasten fluidisch mit einem Niederdruckbereich zu verbinden, in dem der Druck während der Fahrt des Schienenfahrzeugs niedriger ist als im Hochdruckbereich. Auf diese Weise kann ein Rückstau aufgrund des Hochdrucks an der Unterseite des Fahrzeugbodens vermieden werden. Die abgeschiedenen Verunreinigungen können vom Sammelkasten einfach in den Niederdruckbereich übertreten. Je nach Druckverhältnis ist es sogar möglich, die Verunreinigungen aus dem Sammelkasten abzusaugen.

Zweckmäßig schließt der jeweilige Sammelkasten in einer Anschlussrichtung an die zugehörige Abscheidestruktur an, wobei diese Anschlussrichtung vorzugsweise quer zu einer Durchströmungsrichtung orientiert sein kann, in welcher der Kühlluftstrom die Abscheidestruktur durchströmt. In einer konventionellen Abscheidestruktur treibt die Schwerkraft die abgeschiedenen Verunreinigungen in Richtung Sammelkasten an. Dementsprechend erstreckt sich der jeweilige Sammelkasten in der Regel quer zur Schwerkraftrichtung, wobei selbstverständlich ein Gefälle vorgesehen sein kann. Die fluidische Verbindung des Sammelkastens mit dem jeweiligen Niederdruckbereich kann zweckmäßig quer zur Fahrtrichtung und quer zur Schwerkraftrichtung erfolgen. Dies ist jedoch nicht zwingend erforderlich. Die Positionierung der fluidischen Verbindung zwischen Sammelkasten und Niederdruckbereich hängt in erster Linie vom vorhandenen Bauraum und vom ggf. vorhandenen Differenzdruck ab.

Gemäß einer vorteilhaften Ausführungsform kann der jeweilige Sammelkasten einen Niederdruckanschluss zur fluidischen Verbindung des Sammelkastens mit dem Niederdruckbereich aufweisen, der vorzugsweise quer zur Anschlussrichtung und/oder quer zur Durchströmungsrichtung am Sammelkasten angeordnet sein kann. Durch die Orientierung des Niederdruckanschlusses quer zur Anschlussrichtung lassen sich die Verunreinigungen besonders einfach aus dem Sammelkasten abführen.

Bei einer anderen vorteilhaften Ausführungsform kann vorgesehen sein, dass der Niederdruckbereich durch eine Saugseite eines Gebläses gebildet ist, das im Kühlluftpfad stromab des Kühlers angeordnet ist und das die Kühlluftströmung antreibt. Auf diese Weise lässt sich eine aktive Absaugung der Verunreinigungen aus dem Sammelkasten realisieren, wodurch ein Aufstau von Verunreinigungen im Sammelkasten weitgehend vermieden werden kann.

Das Gebläse saugt dabei einen Hauptstrom der Kühlluftströmung durch den jeweiligen Kühler und durch den jeweiligen Abscheider hindurch, während sie einen Nebenstrom der Kühlluftströmung dann aus dem jeweiligen Sammelkasten ansaugt. Das bedeutet, dass am Abscheider die Kühlluftströmung in den Hauptstrom und den Nebenstrom aufgeteilt wird und auf der Saugseite des Gebläses wieder vereint wird. Der Nebenstrom ist dabei deutlich kleiner dimensioniert als der Hauptstrom. Beispielsweise beträgt der Nebenstrom maximal 10%, vorzugsweise maximal 5%, des gesamten Kühlluftstroms. Der Nebenstrom bildet dabei einen Bypass, der den Kühler umgeht.

Entsprechend einer vorteilhaften Weiterbildung kann eine Bypassleitung vorgesehen sein, die den jeweiligen Sammelkasten mit der Saugseite des Gebläses fluidisch verbindet. Eine derartige Bypasssaugleitung lässt sich besonders einfach verlegen, um die gewünschte Umgehung des Kühlers realisieren zu können.

Bei einer anderen vorteilhaften Weiterbildung kann vorgesehen sein, dass das Gebläse ein Gebläsegehäuse aufweist, das eine Luftaustrittsseite des Kühlers mit der Saugseite des Gebläses verbindet. Die zuvor genannte Bypasssaugleitung kann nun von außen an den Sammelkasten und an das Gebläsegehäuse angeschlossen werden. Somit lässt sich mit Hilfe der Bypasssaugleitung einfach der Kühler von außen umgehen. Das Gebläsegehäuse entspricht dabei im Wesentlichen einem Distanzrahmen, der vom Kühler zu einem Gebläserad führt, welches die Kühlluftströmung antreibt.

Entsprechend einer anderen vorteilhaften Weiterbildung kann das Gebläse die vom jeweiligen Sammelkasten dann der Saugseite zugeführten Verunreinigungen zusammen mit dem vom Kühler kommenden, auf die Saugseite angesaugten Kühlluftstrom einer Druckseite des Gebläses zuführen. Die Gebläsedruckseite, also ein Gebläseauslass kann dabei fluidisch mit einer Umgebung des Schienenfahrzeugs verbunden sein bzw. einfach in die Umgebung münden. Somit können die sich im jeweiligen Sammelkasten ansammelnden Verunreinigungen über das Gebläse abgesaugt und in die Umgebung befördert werden. Alternativ kann an der Saugseite des Gebläses auch ein gesteuerter Ablas vorgesehen sein, der z.B. mit einem druckgesteuerten Ventil gesteuert ist.

Bei einer anderen vorteilhaften Ausführungsform können zumindest zwei Abscheider vorgesehen sein, die parallel von separaten Kühlluftströmen durchströmbar angeordnet sind und die jeweils einen Sammelkasten aufweisen, die beide mit demselben Niederdruckbereich fluidisch verbunden sind. Das bedeutet, dass mehrere Sammelkästen über denselben Niederdruckbereich von den Verunreinigungen befreit werden können. Insbesondere können mehrere oder sämtliche Sammelkästen an die Saugseite des Gebläses angeschlossen sein, insbesondere über separate Bypasssaugleitungen.

Bei einer anderen Ausführungsform kann ein im Kühlluftpfad stromauf des jeweiligen Abscheiders angeordneter Vorraum vorgesehen sein, der mittels eines Einlassgitters von einer Umgebung des Schienenfahrzeugs getrennt ist. Die Anbringung eines derartigen Einlassgitters verhindert die Ansaugung grober Verunreinigungen. Bevorzugt handelt es sich beim Einlassgitter um ein Feingitter, das sich dadurch charakterisiert, dass Gitteröffnungen einen Querschnitt aufweisen, der kleiner als 5 mm ist. Vorzugsweise können die Öffnungsquerschnitte der Gitteröffnungen des Feingitters kleiner als 3 mm sein.

Entsprechend einer Weiterbildung kann das Einlassgitter in eine Seitenschürze des Schienenfahrzeugs eingebaut sein, wobei sich das Einlassgitter insbesondere in die Außenkontur der Seitenschürze geometrisch integriert. Hierdurch kann der Strömungswiderstand des Schienenfahrzeugs reduziert werden.

Der Vorraum kann stromauf des jeweiligen Abscheiders einen Auslass aufweisen, der insbesondere nach unten offen ist und sich vorzugsweise an einem Übergang zur Unterseite des Fahrzeugbodens befindet. Auf diese Weise können sich Flüssigkeitstropfen, die sich am Einlassgitter sammeln und daran entlang nach unten abfließen, in die Umgebung abströmen.

Bei einer anderen vorteilhaften Ausführungsform kann wenigstens ein mit einer Umgebung des Schienenfahrzeugs kommunizierender Lufteinlass des Kühlluftpfads quer zur Durchströmungsrichtung gegenüber dem jeweiligen Abscheider versetzt am Schienenfahrzeug angeordnet sein. Beispielsweise kann ein derartiger Lufteinlass in eine Seitenwand des Schienenfahrzeugs eingearbeitet sein, wodurch der jeweilige Lufteinlass quer zur Fahrtrichtung des Schienenfahrzeugs orientiert ist. Durch den Versatz zwischen Lufteinlass und Abscheider ergibt sich ein verlängerter Strömungsweg vom Lufteinlass zum Abscheider, wodurch schwerere Verunreinigungen schwerkraftbedingt noch innerhalb eines stromauf des jeweiligen Abscheiders angeordneten Vorraums nach unten abfallen, bevor der Frischluftstrom zum jeweiligen Abscheider gelangt.

Entsprechend einer vorteilhaften Weiterbildung kann vorgesehen sein, dass der Kühlluftpfad vom Lufteinlass bis zu einer Eintrittsseite des jeweiligen Abscheiders zumindest zwei Strömungsumlenkungen für die Kühlluftströmung definiert. Derartige Strömungsumlenkungen wirken für Verunreinigungen wie ein Trägheitsabscheider, da die Verunreinigungen der Strömungsumlenkung nicht so leicht folgen können wie Luft. Auf diese Weise kann eine effiziente Vorabscheidung der Verunreinigungen bereits vor dem jeweiligen Abscheider realisiert werden.

Gemäß einer anderen vorteilhaften Weiterbildung kann wenigstens ein Lufteinlass in Horizontalrichtung gegenüber dem jeweiligen Abscheider versetzt angeordnet sein, zweckmäßig in einer Außenwand des Schienenfahrzeugs. Die Horizontalrichtung entspricht dabei zweckmäßig der Längsrichtung des Schienenfahrzeugs. In dieser Richtung steht vergleichsweise viel Bauraum zur Verfügung, so dass relativ einfach ein hinreichend großer Strömungsweg realisierbar ist.

Bei einer anderen vorteilhaften Ausführungsform kann wenigstens ein Lufteinlass in Vertikalrichtung gegenüber dem jeweiligen Abscheider versetzt angeordnet sein und dabei zweckmäßig in einer Außenwand des Schienenfahrzeugs untergebracht sein. Hierdurch lässt sich ebenfalls ein relativ langer Strömungspfad realisieren, wobei gleichzeitig in der Fahrzeuglängsrichtung eine kompakte Bauform der Kühleranordnung beibehalten werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte Schnittansicht eines Schienenfahrzeugs im Bereich einer Schienenfahrzeug-Kühleranordnung,
- Fig. 2: eine isometrische Ansicht der Schienenfahrzeug-Kühleranordnung,
- Fig. 3: eine Ansicht wie in Fig. 2, jedoch bei geöffnetem Sammelkasten,
- Fig. 4: eine isometrische Ansicht der Schienenfahrzeug-Kühleranordnung im Bereich eines Gebläses,
- Fig. 5: eine isometrische Ansicht der Kühleranordnung im Bereich von Bypasssaugleitungen,
- Fig. 6: eine nochmals vereinfachte Schnittansicht im Bereich eines Einlassgitters,
- Fig. 7: eine vereinfachte, teilweise transparente Seitenansicht des Schienenfahrzeugs im Bereich der Kühleranordnung,
- Fig. 8: eine isometrische Schnittansicht einer Abscheidestruktur eines Abscheiders der Kühleranordnung.

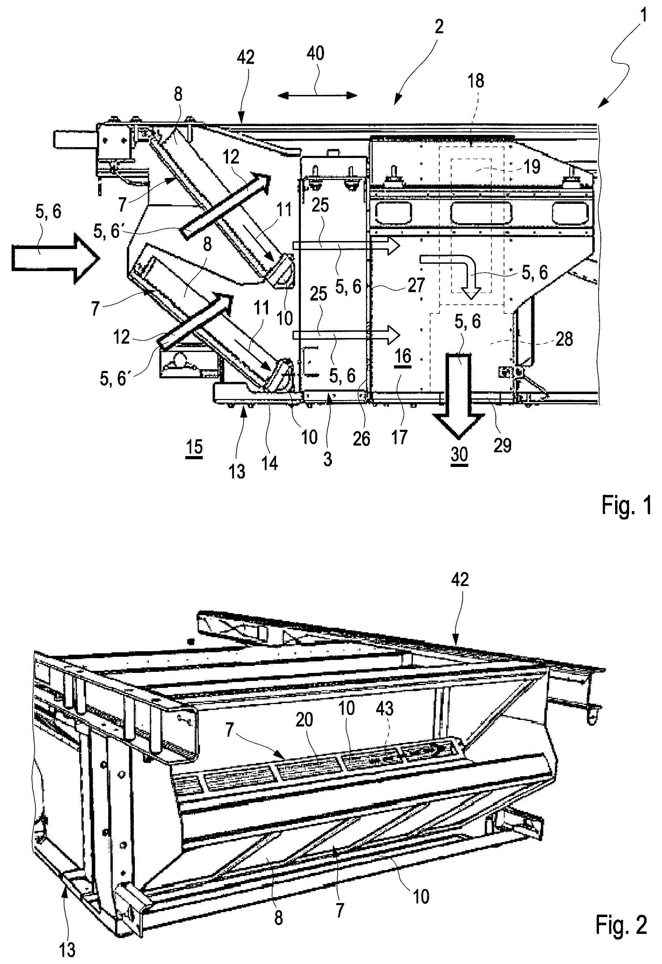

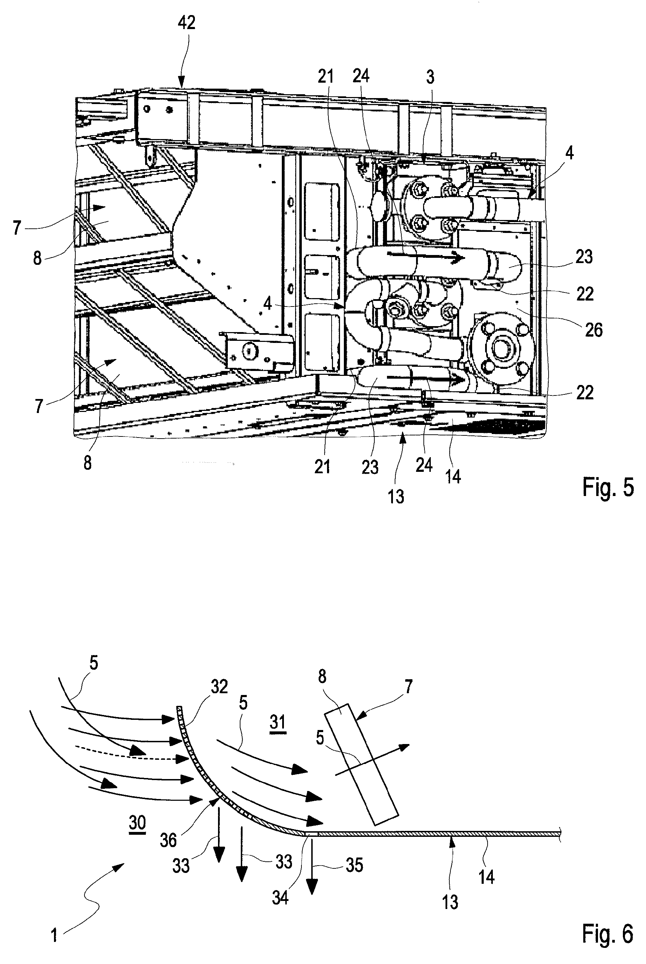

Entsprechend den Fig. 1-8 umfasst ein Schienenfahrzeug 1, bei dem es sich bevorzugt um einen Triebwagen handelt, zumindest eine Schienenfahrzeug-Kühleranordnung 1, die im Folgenden verkürzt auch als Kühleranordnung 2 bezeichnet werden kann. Die Kühleranordnung 2 umfasst einen Kühler 3, der gemäß Fig. 5 in einen Kühlkreis 4 eingebunden ist, in dem ein üblicherweise flüssiges Kühlmittel zirkuliert. Durch den Kühler 3 ist ein in Fig. 1 durch Pfeile angedeuteter Kühlluftpfad 5 hindurchgeführt, der zum Führen eines Kühlluftstroms 6 dient, der durch dieselben Pfeile repräsentiert ist und sich im Betrieb der Kühleranordnung 2 einstellt. Das Schienenfahrzeug 1 weist hierzu ein Fahrgestell 42 auf, an bzw. in dem die Kühleranordnung 2 angeordnet ist und das einen Fahrzeugboden 13 aufweist.

Die Kühleranordnung 2 umfasst außerdem zumindest einen Abscheider 7, der im Kühlluftpfad 5 stromauf des Kühlers 3 angeordnet ist und der zum Abscheiden von flüssigen und/oder festen Verunreinigungen dient, die im Kühlluftstrom 6 mitgeführt werden. Im Beispiel der Fig. 1-5 sind zwei derartige Abscheider 7 vorgesehen, die so angeordnet sind, dass sie parallel von der Kühlluft durchströmbar sind. Der Kühlluftstrom 6 ist im Bereich der beiden Abscheider 7 somit auf zwei Kühlluftteilströme 6' aufgeteilt.

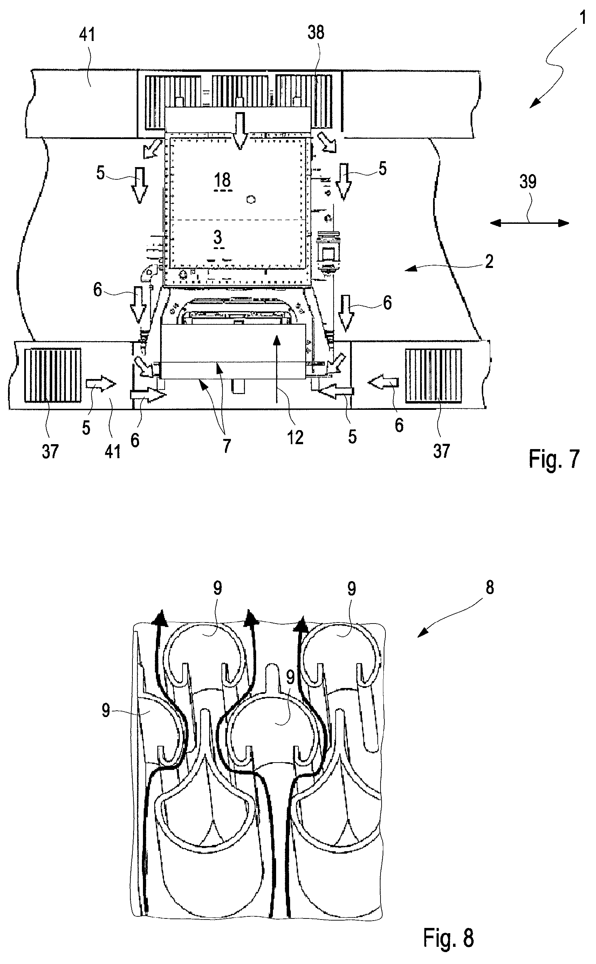

Der jeweilige Abscheider 7 weist eine Abscheidestruktur 8 auf. Ein Beispiel für eine derartige Abscheidestruktur ist in Fig. 8 dargestellt. Erkennbar sind hier mehrere anströmseitig offene Kanäle 9, die rein exemplarisch jeweils einen Omega-förmigen Querschnitt (Ω) besitzen. Verunreinigungen werden gezielt durch die anströmseitig offene Seite des jeweiligen Kanals 9 in den jeweiligen Kanal 9 hineingeführt. Während die Luft einfach wieder aus den Kanälen 9 austreten kann bzw. aufgrund des erhöhten Drucks innerhalb der Kanäle 9 gar nicht erst in die Kanäle 9 eintritt, treten die mitgeführten Verunreinigungen in die Kanäle 9 ein und bleiben darin quasi gefangen. Die Kanäle 9 erstrecken sich geneigt zur Horizontalen, besitzen also eine vertikale Richtungskomponente. Die Kanäle 9 sind somit zumindest teilweise entlang der Schwerkraftrichtung orientiert, so dass die darin gefangenen Verunreinigungen durch die Schwerkraft innerhalb der Kanäle 9 nach unten angetrieben sind und nach unten ablaufen können.

Die Abscheidestruktur 8 ist von der Kühlluftströmung 6 bzw. 6' durchströmbar, scheidet dabei die in der Kühlluftströmung 6, 6' mitgeführten Verunreinigungen ab und kann diese, beispielsweise über die zuvor genannten Kanäle 9, einem Sammelkasten 10 zuführen. Der jeweilige Sammelkasten 10 schließt dabei in einer Anschlussrichtung 11 an die jeweilige Abscheidestruktur 8 an, wobei die jeweilige Anschlussrichtung 11 dabei quer zu einer Durchströmungsrichtung 12 orientiert ist, die in Fig. 1 ebenfalls durch diejenigen Pfeile repräsentiert ist, die auch den Kühlluftpfad 5 bzw. den Kühlluftstrom 6, 6' repräsentieren.

Das Schienenfahrzeug 1 besitzt - wie erläutert - einen Fahrzeugboden 13, der eine Unterseite 14 aufweist, die einem hier nicht gezeigten Schienenbett zugewandt ist, in dem die Schienen verlegt sind, auf denen das Schienenfahrzeug 1 fährt. An dieser Unterseite 14 kann sich im Betrieb des Schienenfahrzeugs 1, vorzugsweise während der Fahrt des Schienenfahrzeugs 1, ein Hochdruckbereich 15 ausbilden. Der jeweilige Sammelkasten 10 ist gegenüber diesem Hochdruckbereich 15 geschlossen. Ferner ist der jeweilige Sammelkasten 10 fluidisch mit einem Niederdruckbereich 16 verbunden, der sich dadurch charakterisiert, dass während der Fahrt des Fahrzeugs 1 der darin herrschende Druck niedriger ist als im Hochdruckbereich 15. Im bevorzugten Beispiel handelte es sich beim Niederdruckbereich 16 um eine Saugseite 17 eines Gebläses 18. Dieses Gebläse 18 ist im Kühlluftpfad 5 stromab des Kühlers 3 angeordnet und dient zum Antreiben der Kühlluftströmung 6. Hierzu umfasst das Gebläse 18 zumindest ein Gebläserad 19, beispielsweise in Form eines Radialverdichters. Ebenso kann das Gebläserad 19 ein Axialverdichter oder Propeller sein.

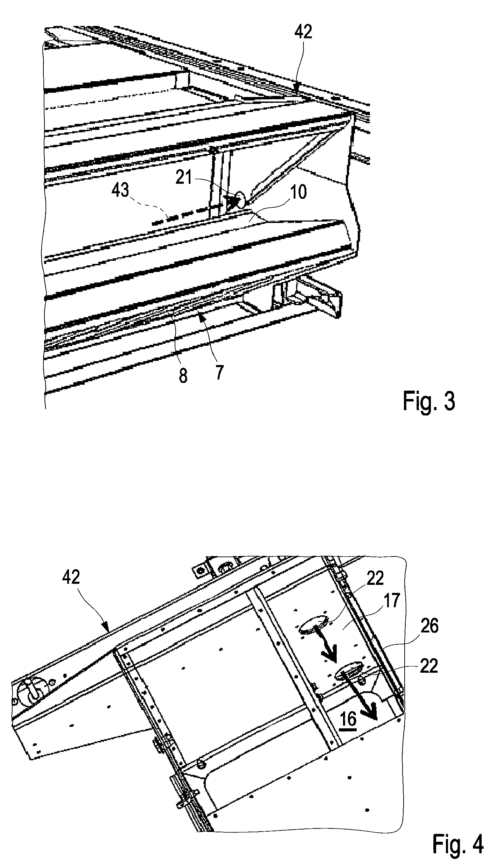

Fig. 2 zeigt die Kühleranordnung 2, wobei zur besseren Veranschaulichung beim oberen Abscheider 7 die Abscheidestruktur 8 weggelassen worden ist, so dass der Sammelkasten 10 des oberen Abscheiders 7 erkennbar ist. Der Sammelkasten 10 ist an seiner dem Betrachter zugewandten Oberseite mit einem Abdeckgitter 20 abgedeckt, das für die über die zugehörige Abscheidestruktur 8 zugeführten Verunreinigungen durchlässig ist. Zur besseren Einsicht ist in Fig. 3 dieses Abdeckgitter 20 weggelassen, wodurch ein Niederdruckanschluss 21 des Sammelkastens 10 erkennbar ist, mit dessen Hilfe die fluidische Verbindung des Sammelkastens 10 mit dem Niederdruckbereich 16 realisierbar ist. Im Beispiel ist der Niederdruckanschluss 21 quer zur Anschlussrichtung 11 orientiert, also bezüglich einer Längsrichtung 43 des geradlinigen Sammelkastens 10 stirnseitig angeordnet.

In Fig. 4 sind zwei Verbindungsöffnungen 22 erkennbar, über welche der jeweilige Sammelkasten 10 mit dem Niederdruckbereich 16 bzw. mit der Saugseite 17 des Gebläses 18 verbunden werden kann. Vorzugsweise erfolgt diese fluidische Verbindung mit Hilfe von Bypasssaugleitungen 23, die in Fig. 5 dargestellt sind. Die jeweilige Bypasssaugleitung 23 verbindet dabei den jeweiligen Niederdruckanschluss 21 mit der zugehörigen Einlassöffnung 22. Bemerkenswert ist dabei, dass die Bypasssaugleitungen 23 an einer Außenseite der Kühleranordnung 2 verlaufen, so dass die Bypasssaugleitungen 23 außen am Kühler 3 vorbeigeführt sind. Mit anderen Worten, das Gebläse 18 saugt über die Bypasssaugleitungen 23 durch die Sammelkästen 10 einen Nebenstrom an, der die abgeschiedenen Verunreinigungen mit sich führt. Dieser Nebenstrom ist in Fig. 5 durch Pfeile angedeutet und mit 24 bezeichnet. Für die Kühlluftströmung 6 bedeutet dies, dass ein Gesamtstrom an den Abscheidern 7 in einen Hauptstrom und den Nebenstrom 24 aufgeteilt wird. Der Hauptstrom ist dabei in Fig. 1 durch Pfeile 25 angedeutet, die dort gleichzeitig einen Abschnitt des Kühlluftpfads 5 bzw. einen Teil des Kühlluftstroms 6 repräsentieren. Während der Hauptstrom 25 durch den Kühler 3 geführt wird, umgeht der Nebenstrom 24 den Kühler 3, so dass der Nebenstrom 24 bezüglich des Kühlers 3 einen Bypass bildet.

Im Beispiel besitzt das Gebläse 18 ein Gebläsegehäuse 26, das eine Luftaustrittsseite 27 des Kühlers 3 mit der Saugseite 17 des Gebläses 18 fluidisch verbindet. Die Bypasssaugleitungen 23 sind nun an einer Außenseite dieses Gebläsegehäuses 26 angeordnet, also von außen an die Sammelkästen 10 und an das Gebläsegehäuse 26 angeschlossen. Das Gebläse 18 kann nun die vom jeweiligen Sammelkasten 10 kommenden, der Saugseite 17 zugeführten Verunreinigungen zusammen mit dem vom Kühler 3 kommenden, auf die Saugseite 17 angesaugten, Kühlluftstrom 6 einer Druckseite 28 des Gebläses 18 zuführen. Die Druckseite 28 kann über eine entsprechende Austrittsöffnung 29 beispielsweise einer Umgebung 30 des Schienenfahrzeugs 1 zugeführt werden. Im Beispiel der Fig. 1 ist die Auslassöffnung 29 am Fahrzeugboden 13 ausgebildet, so dass die Druckseite 28 des Gebläses 18 in den Hochdruckbereich 15 der Umgebung 30 mündet. Das Gebläse 18 bzw. das Gebläserad 19 ist besonders robust gegenüber Verunreinigungen im Kühlluftstrom 6, jedenfalls robuster als der Kühler 3.

Gemäß Fig. 6 kann im Kühlluftpfad 5 stromauf des jeweiligen Abscheiders 7 ein Vorraum 31 vorgesehen sein. Der Vorraum 31 ist dabei über ein Einlassgitter 32 von der Umgebung 30 des Fahrzeugs 1 getrennt. Das Einlassgitter 32 ist dabei bevorzugt als Feingitter konzipiert. Löcher oder Öffnungen des Einlassgitters 32 besitzen dann einen Öffnungsquerschnitt von maximal 5 mm und vorzugsweise von maximal 3 mm. Das Einlassgitter 32 bewirkt zum einen, dass grobe Verunreinigungen, die in dem Kühlluftstrom 5 mitgeführt werden, nicht in den Vorraum 31 gelangen. Des Weiteren können auch kleinere Verunreinigungen bereits am Einlassgitter 32 angesammelt und entlang des Einlassgitters 32 abgeführt werden. Beispielsweise können sich flüssige Verunreinigungen mittels Koaleszenz zu größeren Einheiten zusammenschließen, die dann einfach abfließen können. Auch feste, insbesondere feuchte, Verunreinigungen können sich am Einlassgitter 32 mittels Agglomeration zu größeren Einheiten zusammenballen, die dann entlang des Einlassgitters 32 abfallen können. Das Abfallen von Verunreinigungen, die außerhalb des Einlassgitters 32 anfallen bzw. abgeschieden werden, ist in Fig. 6 durch Pfeile 33 angedeutet. Der Vorraum 31 besitzt einen Auslass 34, der gemäß einem Pfeil 35 ein Abführen von Verunreinigungen aus dem Vorraum 31 ermöglicht, die sich an der Innenseite des Einlassgitters 32 bilden und sammeln können. Das Einlassgitter 32 ist im Beispiel der Fig. 6 in eine Seitenschürze 36 des Schienenfahrzeugs 1 integriert, wobei der Auslass 34 am Übergang der Seitenschürze 36 zum Fahrzeugboden 13 ausgebildet ist.

Gemäß der in Fig. 7 wiedergegebenen Seitenansicht können Lufteinlässe 37 bzw. 38, die mit der Umgebung 30 des Schienenfahrzeugs 1 kommunizieren, quer zur Durchströmungsrichtung 12, die im jeweiligen Abscheider 7 herrscht, gegenüber dem jeweiligen Abscheider 7 versetzt angeordnet sein. In Fig. 7 ist eine Längsrichtung 39 des Schienenfahrzeugs 1 angedeutet, die in Fig. 1 senkrecht zur Zeichnungsebene verläuft. Gemäß der in Fig. 7 gezeigten Ausführungsform sind die Lufteinlässe 37, 38 bezüglich einer Fahrzeugquerrichtung 40, die in Fig. 7 senkrecht zur Zeichnungsebene verläuft und die in Fig. 1 durch einen Doppelpfeil angedeutet ist, zum jeweiligen Abscheider 7 versetzt. Hierdurch wird der Kühlluftpfad 5 verlängert, wodurch sich mitgeführte Verunreinigungen leichter absetzen können. Erkennbar wird dabei außerdem erreicht, dass der Kühlluftstrom 6 zwischen dem jeweiligen Lufteinlass 37 und dem jeweiligen Abscheider 7 zumindest zweimal umgelenkt werden muss, so dass der jeweilige Kühlluftpfad 5 wenigstens zwei Strömungsumlenkungen definiert.

Die beiden Lufteinlässe 37 sind in einer parallel zur Fahrzeuglängsrichtung 39 orientierten Horizontalrichtung gegenüber dem jeweiligen Abscheider 7 versetzt angeordnet, und zwar bevorzugt in einer Außenwand 41 des Schienenfahrzeugs 1. Dagegen ist der Lufteinlass 38 in einer Vertikalrichtung gegenüber dem jeweiligen Abscheider 7 versetzt angeordnet, vorzugsweise in der Außenwand 41.

## Patentansprüche

1. Schienenfahrzeug-Kühleranordnung eines Schienenfahrzeugs (1),
- mit einem Kühler (3), der in einen Kühlkreis (4) zum Führen eines flüssigen Kühlmittels eingebunden ist und durch den ein Kühlluftpfad (5) zum Führen eines Kühlluftstroms (6) hindurchgeführt ist,
- mit wenigstens einem im Kühlluftpfad (5) stromauf des Kühlers (3) angeordneten Abscheider (7) zum Abscheiden von flüssigen und/oder festen Verunreinigungen des Kühlluftstroms (6),
- wobei der jeweilige Abscheider (7) eine Abscheidestruktur (8) aufweist, die von der Kühlluftströmung (6) durchströmbar ist und die abgeschiedene Verunreinigungen einem Sammelkasten (10) zuführt,
**dadurch gekennzeichnet,**
- **dass** der jeweilige Sammelkasten (10) gegenüber einem Hochdruckbereich (15) geschlossen ist, der sich während der Fahrt des Schienenfahrzeugs (1) an einer Unterseite (14) eines Fahrzeugbodens (13) ausbilden kann, und
- **dass** der jeweilige Sammelkasten (10) fluidisch mit einem Niederdruckbereich (16) verbunden ist, in dem der Druck während der Fahrt des Schienenfahrzeugs (1) niedriger ist als im Hochdruckbereich (15).

2. Anordnung nach Anspruch 1,
**dadurch gekennzeichnet,**
**dass** der jeweilige Sammelkasten (10) einen Niederdruckanschluss (21) zur fluidischen Verbindung des Sammelkastens (10) mit dem Niederdruckbereich (16) aufweist, der im Wesentlichen quer zu einer Anschlussrichtung (11) am Sammelkasten (10) angeordnet ist, in welcher der Sammelkasten (10) an die Abscheidestruktur (8) anschließt.

3. Anordnung nach Anspruch 1 oder 2,
**dadurch gekennzeichnet,**
**dass** der Niederdruckbereich (16) durch eine Saugseite (17) eines Gebläses (19) gebildet ist, das im Kühlluftpfad (5) stromab des Kühlers (3) angeordnet ist und das die Kühlluftströmung (6) antreibt.

4. Anordnung nach Anspruch 3,
**dadurch gekennzeichnet,**
**dass** eine Bypasssaugleitung (23) vorgesehen ist, die den jeweiligen Sammelkasten (10) mit der Saugseite (17) des Gebläses (18) fluidisch verbindet.

5. Anordnung nach Anspruch 4,
**dadurch gekennzeichnet,**
- **dass** das Gebläse (18) ein Gebläsegehäuse (26) aufweist, das eine Luftaustrittsseite (27) des Kühlers (3) mit der Saugseite (17) des Gebläses (18) verbindet,
- **dass** die jeweilige Bypasssaugleitung (23) von außen an den Sammelkasten (10) und an das Gebläsegehäuse (26) angeschlossen ist.

6. Anordnung nach einem der Ansprüche 3 bis 5,
**dadurch gekennzeichnet,**
**dass** das Gebläse (18) die vom jeweiligen Sammelkasten (10) kommenden, der Saugseite (17) zugeführten Verunreinigungen zusammen mit dem vom Kühler (3) kommenden, auf die Saugseite (17) angesaugten Kühlluftstrom (6) einer Druckseite (28) des Gebläses (18) zuführt.

7. Anordnung nach einem der Ansprüche 1 bis 6,
**dadurch gekennzeichnet,**
**dass** zumindest zwei Abscheider (7) vorgesehen sind, die parallel von separaten Kühlluftteilströmen (6') durchströmbar angeordnet sind und die jeweils einen Sammelkasten (10) aufweisen, die mit demselben Niederdruckbereich (16) fluidisch verbunden sind.

8. Anordnung nach einem der Ansprüche 1 bis 7,
**dadurch gekennzeichnet,**
**dass** ein im Kühlluftpfad (5) stromauf des jeweiligen Abscheiders (7) angeordneter Vorraum (31) vorgesehen ist, der mittels eines Einlassgitters (32) von einer Umgebung (30) des Schienenfahrzeugs (1) getrennt ist.

9. Anordnung nach Anspruch 8,
**dadurch gekennzeichnet,**
**dass** das Einlassgitter (32) in einer Seitenschürze (36) des Schienenfahrzeugs (1) angeordnet ist.

10. Anordnung nach einem der Ansprüche 1 bis 9,
**dadurch gekennzeichnet,**
**dass** wenigstens ein mit einer Umgebung (30) des Schienenfahrzeugs (1) kommunizierende Lufteinlass (37, 38) des Kühlluftpfads (5) quer zur Durchströmungsrichtung (12) des jeweiligen Abscheiders (7) gegenüber dem jeweiligen Abscheider (7) versetzt angeordnet ist.

11. Anordnung nach Anspruch 10,
**dadurch gekennzeichnet,**
**dass** der Kühlluftpfad (5) vom Lufteinlass (37, 38) bis zu einer Eintrittsseite des jeweiligen Abscheiders (7) zumindest zwei Strömungsumlenkungen für die Kühlluftströmung (6) definiert.

12. Anordnung nach einem der Ansprüche 1 bis 11,
**dadurch gekennzeichnet,**
**dass** wenigstens ein Lufteinlass (37) in Horizontalrichtung gegenüber dem jeweiligen Abscheider (7) versetzt angeordnet ist.

13. Anordnung nach einem der Ansprüche 1 bis 12,
**dadurch gekennzeichnet,**
**dass** wenigstens ein Lufteinlass (38) in Vertikalrichtung gegenüber dem jeweiligen Abscheider (7) versetzt angeordnet ist.

14. Schienenfahrzeug, insbesondere Triebwagen, mit einem Fahrgestell (42), das einen Fahrzeugboden (13) aufweist und an den wenigstens eine Schienenfahrzeug-Kühleranordnung (2) nach einem der Ansprüche 1 bis 13 angeordnet ist.

## Claims

1. A rail vehicle radiator arrangement of a rail vehicle (1),
- with a radiator (3), which is incorporated in a cooling circuit (4) for conducting a liquid coolant and through which a cooling air path (5) for conducting a cooling air stream (6) is conducted,
- with at least one separator (7) arranged in the cooling air path (5) upstream of the radiator (3) for separating liquid and/or solid contaminations of the cooling air stream (6)
- wherein the respective separator (7) has a separating structure (8), through which the cooling air flow (6) can flow and feeds the separated contamination to a collecting box (10), **characterized in that** the respective collecting box (10) is closed with respect to a high-pressure region (15), which can form during the travelling of the rail vehicle (1) on a lower side (14) of a vehicle floor (13), and **in that** the respective collecting box (10) is fluidically connected to a low-pressure region (16), in which the pressure while the rail vehicle is travelling (1) is lower than in the high-pressure region (15).

2. The arrangement according to Claim 1, **characterized in that** the respective collecting box (10) comprises a low-pressure connection (21) for fluidically connecting the collecting box (10) to the low-pressure region (16), which is substantially arranged on the collecting box (10) transversely to a connection direction (11), in which the collecting box (10) connects to the separating structure (8).

3. The arrangement according to Claim 1 or 2, **characterized in that** the low-pressure region (16) is formed through a suction side (17) of a blower (19), which in the cooling air path (5) is arranged downstream of the radiator (3) and which drives the cooling air flow (6).

4. The arrangement according to Claim 3, **characterized in that** a bypass suction line (23) is provided, which fluidically connects the respective connecting box (10) to the suction side (17) of the blower (18).

5. The arrangement according to Claim 4, **characterized**
- **in that** the blower (18) comprises a blower housing (26), which connects an air outlet side (27) of the radiator (3) to the suction side (17) of the blower (18),
- **in that** the respective bypass suction line (23) is connected from the outside to the collecting box (10) and to the blower housing (26).

6. The arrangement according to any one of the Claims 3 to 5, **characterized in that** the blower (18) feeds the contaminations coming from the respective collecting box (10) fed to the suction side (17) together with the cooling air stream (6) coming from the radiator (3) sucked in on the suction side (17) to a pressure side (28) of the blower (18).

7. The arrangement according to any one of the Claims 1 to 6, **characterized in that** at least two separators (7) are provided, which are arranged so that separate cooling air part streams (6') can flow through these in parallel and which comprise a collecting box (10) each, which are fluidically connected to the same low-pressure region (16).

8. The arrangement according to any one of the Claims 1 to 7, **characterized in that** a pre-chamber (31) arranged in the cooling air path (5) upstream of the respective separator (7) is provided, which by means of an inlet grille (32) is separated from a surroundings (30) of the rail vehicle (1).

9. The arrangement according to Claim 8, **characterized in that** the inlet grille (32) is arranged in a lateral apron (36) of the rail vehicle (1).

10. The arrangement according to any one of the Claims 1 to 9, **characterized in that** at least one air inlet (37, 38) of the cooling air path (5) communicating with a surroundings (30) of the rail vehicle (1) is arranged offset with respect to the respective separator (7) transversely to the through-flow direction (12) of the respective separator (7).

11. The arrangement according to Claim 10, **characterized in that** the cooling air path (5) from the air inlet (37, 38) up to an inlet side of the respective separator (7) defines at least two flow deflections for the cooling air flow (6).

12. The arrangement according to any one of the Claims 1 to 11, **characterized in that** at least one air inlet (37) is arranged offset in horizontal direction with respect to the respective separator (7).

13. The arrangement according to any one of the Claims 1 to 12, **characterized in that** at least one air inlet (38) is arranged offset relative to the respective separator (7) in vertical direction.

14. A rail vehicle, in particular locomotive, with a chassis (42), which comprises a vehicle floor (13) and on which at least one rail vehicle radiator arrangement (2) according to any one of the Claims 1 to 13 is arranged.

## Revendications

1. Dispositif de refroidisseur de véhicule ferroviaire d'un véhicule ferroviaire (1)
- comportant un refroidisseur (3), qui est intégré dans un circuit de refroidissement (4) pour guider un milieu de refroidissement liquide et à travers lequel un trajet d'air de refroidissement (5) pour guider un courant d'air de refroidissement (6) est ménagé,
- comportant au moins un séparateur (7) disposé dans le trajet d'air de refroidissement (5) en amont du refroidisseur (3) pour séparer les impuretés liquides et/ou solide du courant d'air de refroidissement (6),
- dans lequel le séparateur respectif (7) présente une structure de séparation (8), qui peut être traversé par le courant d'air de refroidissement (6) et introduit les impuretés séparées dans une caisse collectrice (10),
**caractérisé en ce que**
- la caisse collectrice respective (10) est fermée par rapport à une zone à haute pression (15), qui peut apparaître pendant la conduite du véhicule ferroviaire (1) sur un côté inférieur (14) d'un plancher de véhicule (13),
- et **en ce que** la caisse collectrice respective (10) est reliée fluidiquement avec une zone à basse pression (16), dans laquelle la pression pendant la conduite du véhicule ferroviaire (1) est plus basse que dans la zone à haute pression (15).

2. Dispositif selon la revendication 1, **caractérisée en ce que** la caisse collectrice respective (10) présente un raccord à basse pression (21) pour relier fluidiquement la caisse collectrice (10) avec la zone à basse pression (16), qui est disposé essentiellement transversalement par rapport à une direction de raccordement (11) sur la caisse collectrice (10), dans lequel la caisse collectrice (10) se raccorde à la structure de séparation (8).

3. Dispositif selon la revendication 1 ou 2, **caractérisé en ce que** la zone à basse pression (16) est formée par un côté d'aspiration (17) d'un ventilateur (19), qui est disposé dans le trajet d'air de refroidissement (5) en aval du refroidisseur (3) et qui entraîne le courant d'air de refroidissement (6).

4. Dispositif selon la revendication 3, **caractérisé en ce qu'**une conduite d'aspiration de déviation (23) est prévue, qui relie fluidiquement la caisse collectrice respective(10) avec le côté d'aspiration (17) du ventilateur (18).

5. Dispositif selon la revendication 4, **caractérisé en ce que**
- le ventilateur (18) présente un logement de ventilateur (26), qui relie un côté de sortie d'air (27) du refroidisseur (3) avec le côté d'aspiration (17) du ventilateur (18),
- la conduite d'aspiration de déviation respective (23) est raccordée de l'extérieur à la caisse collectrice (10) et au logement de ventilateur (26).

6. Dispositif selon une des revendications 3 à 5, **caractérisé en ce que** le ventilateur (18) introduit les impuretés venant de la caisse collectrice respective (10), introduites du côté d'aspiration (17) conjointement au courant d'air de refroidissement (6) venant du refroidisseur (3), aspiré sur le côté d'aspiration (17) dans un côté pressurisé (28) du ventilateur (18).

7. Dispositif selon une des revendications 1 à 6, **caractérisée**
**en ce que** au moins deux séparateurs (7) sont prévus, qui sont disposés de manière à être traversés parallèlement par des courants partiels d'air de refroidissement (6') et qui présentent respectivement une caisse collectrice (10), qui sont reliés fluidiquement avec la même zone à basse pression (16).

8. Dispositif selon une des revendications 1 à 7, **caractérisé en ce qu'**un espace préliminaire (31) disposés dans le trajet d'air de refroidissement (5) en amont du séparateur (7) respectif est prévu, qui est séparé au moyen d'une grille d'admission (32) d'un environnement (30) du véhicule ferroviaire (1).

9. Dispositif selon la revendication 8, **caractérisé en ce que** la grille d'admission (32) est disposée dans une jupe latérale (36) du véhicule ferroviaire (1).

10. Dispositif selon une des revendications 1 à 9, **caractérisé en ce qu'**au moins une admission d'air (37,38) du trajet d'air de refroidissement (5) communiquant avec un environnement (30) du véhicule ferroviaire (1) est disposée en décalage transversalement à la direction d'écoulement traversant (12) du séparateur respectif (7) par rapport au séparateur respectif (7).

11. Dispositif selon la revendication 10, **caractérisé en ce que** le trajet d'air de refroidissement (5) de l'admission d'air (37,38) jusqu'à un côté d'entrée du séparateur respectif (7) définit au moins deux déviations d'écoulement pour le courant d'air de refroidissement (6).

12. Dispositif selon une des revendications 1 à 11, **caractérisé en ce qu'**au moins une admission d'air (37) est disposée en décalage dans la direction horizontale par rapport au séparateur respectif (7).

13. Dispositif selon une des revendications 1 à 12, **caractérise en ce qu'**au moins une admission d'air (38) est disposée en décalage dans la direction verticale par rapport au séparateur respectif (7).

14. Véhicule ferroviaire, notamment automotrice, comportant un châssis de véhicule (42), qui présente un plancher de véhicule (13) et sur lequel au moins un dispositif de refroidisseur de véhicule ferroviaire (2) selon une des revendications 1 à 13 est disposé.
